# EUROPÄISCHE PATENTSCHRIFT

(11) **EP 3 612 752 B1**
(45) Veröffentlichungstag und Bekanntmachung des Hinweises auf die Patenterteilung: **30.11.2022**
(21) Anmeldenummer: 17818036.0
(22) Anmeldetag: 12.10.2017
(51) Int. Cl.: F16H 25/20, H02K 7/06

(54) **ANTRIEBSEINRICHTUNG FÜR EINEN VERFAHRBAREN STÖSSEL**
DRIVE DEVICE FOR A MOVABLE TAPPET
DISPOSITIF D'ENTRAÎNEMENT POUR POUSSOIR MOBILE

(30) Priorität: 20.04.2017 DE 202017102338 U
(43) Veröffentlichungstag der Anmeldung: 26.02.2020
(73) Patentinhaber: Otto-von-Guericke-Universität Magdeburg, Patentwesen, 39106 Magdeburg (DE)
(72) Erfinder: DRAGANOV, Denis, 39104 Magdeburg (DE); TYSHAKIN, Oleksandr, 39106 Magdeburg (DE)
(74) Vertreter: Ahrens, Gabriele
(86) Internationale Anmeldenummer: PCT/DE2017/100870
(87) Internationale Veröffentlichungsnummer: WO 2018/192595

(56) Entgegenhaltungen:
- DE-A1-102010 039 916
- DE-A1-102015 219 502
- US-A1- 2006 053 577

## Beschreibung

Die Erfindung betrifft eine Antriebseinrichtung zur Umwandlung einer rotatorischen Bewegung eines Rotors einer elektromagnetischen Rotationsmaschine in eine translatorische Bewegung eines verfahrbaren Stößels.

Aus DE 10 2013 005 732 A1 und US 9 548 637 B2 sind Schritt- BLDC- und DC-Motoren mit reibschlüssiger Verbindung eines Rotors mit einer Spindel über eine kegelige Presspassung bekannt, wobei die entsprechende Verbindungselemente mit Innen- und Aussenkonus viel Platz in axiale Richtung in Anspruch nehmen und somit die Gesamtlänge der Anordnung für gegebenen Verfahrweg vergrößern.

Außerdem sieht die in DE 10 2013 005 732 A1 und US 9 548 637 B2 vorgeschlagene Anordnung ein Distanzstück (5) (engl. spacer(5)) vor, das die Gesamtlänge der Anordnung ebenso vergrößert, ohne dabei einen Beitrag zu dem Verfahrweg oder zur Antriebskraft zu leisten.

Bekannt aus DE 10 2015 219 502 A1 ist ein Linearstellantrieb dessen Linearbewegung mittels eines Gewindepaares bestehend aus einer durch den Rotor erstreckender langer Gewindemutter (Gewindespindelanordnung (6)) und aus einem kürzeren Spindelstück (Gewindeabschnitt (35)) realisiert ist.

Der Fertigungsaufwand für eine solche Konstellation des Gewindepaars liegt jedoch deutlich höher als der für eine herkömmliche Ausführung mit einer kurzen Gewindemutter und einer langen Gewindespindel, somit muss konstruktiv angestrebt werden, dass die Länge mit Innengewinde versehenen Komponenten so kurz wie möglich zu halten.

Die drehfeste Linearführung erfolgt laut DE 10 2015 219 502 A1 mittels einer vom Querschnitt polygonaler Führungsstange (Führungsabschnitt (34; 54; 74)), deren Abdichtung zu der Umgebung eine komplexe Maßnahme erfordert.

Aus DE 100 03 129 A1 ist eine zu DE 10 2015 219 502 A1 ähnliche Anordnung des Motors und des Gewindepaars, bestehend aus einer langen Gewindemutter (8) und einer Spindel (6), bekannt und somit betreffen die o.g. DE 10 2015 219 502 A1 Probleme die hier offenlegte Anordnung im gleichen Maße.

Außerdem sieht die Anordnung im DE 10 2015 219 502 A1 eine Zwischenwand (31) vor, die die magnetische Kopplung zwischen dem Stator und dem Rotor erheblich beeinträchtigt und somit reduziert die Kraftdichte des Antriebes.

Aus DE 10 2016 105 098 A1 ist eine Ausführungsform bekannt wobei der Motor (hier ein geschalteter Reluktanzmotor) seine Rotationsbewegung in die Linearbewegung mittels eines Gewindepaares (Gewindespindel (70) und Gewindebohrung (78)) übersetzt. Hier erfolgt allerdings die mechanische Übertragung außerhalb des Motors und nimmt somit einen zusätzlichen Einbauraum in Anspruch.

Vor diesem Hintergrund besteht die Aufgabe der vorliegenden Erfindung in der Überwindung der aufgezeigten Nachteile.

Diese Aufgabe wird nun mit einer Vorrichtung nach Anspruch 1 gelöst. Weitere vorteilhafte Ausführungsformen gehen aus den Unteransprüchen hervor.

Vorgeschlagen wird eine Antriebseinrichtung (1') zur Erzeugung einer translatorischen Bewegung eines verfahrbaren Stößels (8) mittels einer elektromagnetischen Rotationsmaschine, umfassend zumindest:
- einen Rotor (4),
- einen zum Rotor (4) koaxial angeordneten Stator (5) mit zumindest einem darin koaxial integrierten Bewegungsgewinde-Paar, umfassend eine drehfest mit dem Rotor (4) gekoppelte Gewindespindel (6) und einer, in einer Statorhülse (2) verdrehsicher linear geführten Gewindemutter (7), die mit dem Stößel (8) starr gekoppelt ist, wobei
- der Rotor (4) um den Stator (5) drehbeweglich geführt wird, wobei
- die Übertragung eines Drehmoments vom Rotor (4) zur Gewindespindel (6) mittels eines dünnwandigen Flansches (10) erfolgt, wobei
- eine Verdrehsicherung (11) der Gewindemutter (7) in der Ausnehmung der Statorhülse (2) durch eine formschlüssige Zusammenfügung der beiden vorgesehen ist.

Dabei umfasst die Verdrehsicherung zumindest folgende Komponenten:
Erfindungsgemäß wird der Rotor (4) um den Stator (5) außerhalb drehbeweglich geführt, womit der Rotor (4) zum einen eine große dem Stator (5) zugewandte Interaktionsfläche bietet und damit eine zusammenhängende große Antriebskraft ausgeübt wird, zum anderen eine Ausnehmung (14) für die innere Übersetzungsmechanik (6, 7) bietet.

Bevorzugt erstreckt sich die Gewindespindel (6) durch die gesamte Länge der Antriebseinrichtung (1'), beginnend von der Innenfläche (I_{F}) des Flansches (10), um die Länge der Antriebseinrichtung (1') für einen nutzbaren Verfahrweg (V_{W}) des Stößels (8) vollständig auszuschöpfen, obgleich auch kürzere oder längere Ausführungen der Gewindespindel (6) in Frage kommen können. Beispielsweise kann sich die Gewindespindel (6) von der Innenfläche (I_{F}) des Flansches (10) bis zu einer Außenfläche (A_{G}) des Gehäuseflansches (1) erstrecken.

Eine Ausführungsform der Erfindung sieht vor, dass die Antriebseinrichtung (1') zu folgenden Motortypen gehören kann:
- Synchronmotoren einschließlich Transversalflussmotoren und Reluktanzmotoren und Schrittmotoren,
- Asynchronmotoren,
- elektronik-kommutierte Gleichstrommotoren oder
- bürstenkommutierte Gleichstrommotoren.

Der dünnwandige Flansch (10) nimmt eine minimale Einbaulänge in axialer Richtung, d.h. in Richtung der Achse X in Anspruch und maximiert einen nutzbaren Verfahrweg (Vw) des Stößels (8).

Unter dem Begriff "dünnwandig" wird bei der erfindungsgemäßen Antriebseinrichtung (1') verstanden, dass das Verhältnis eines Durchmessers (D) zu einer Wandstärke (T) größer 10 ist, d.h. D/T > 10.

In einer weiteren Ausführungsform der Erfindung ist vorgesehen, dass in einem Gehäuseflansch (1) ein elektrischer Anschluss (9) für eine Energieversorgung und/oder Signalübertragung zur magnetischen und/oder optischen kontakt- oder berührungslosen Erfassung der Linearbewegung des Stößels (8) und/oder der Rotationsbewegung des Rotors (4) angeordnet ist.

Dabei kann der elektrische Anschluss (9) als Steckverbinder, als Kabelausführung oder ähnliches ausgebildet sein.

Weiterhin vorgesehen ist, dass in der Antriebseinrichtung (1') ein Sensorsystem (13) zur Erfassung der Rotationsbewegung des Rotors (4) vorgesehen ist.

Zudem kann die lineare Bewegung des Stößels (8) über das Sensorsystem (13) oder ein ähnliches System erfasst werden.

In einer weiteren Ausführungsform der Erfindung ist vorgesehen, dass die Ansteuerung der elektromagnetischen Rotationsmaschine der Antriebseinrichtung (1') sensorlos erfolgt.

Beispielsweise kann die sensorlose Ansteuerung durch eine Auswertung der Leistungssignale der elektromagnetischen Rotationsmaschine erfolgen.

Die Funktionsweise der Antriebseinrichtung (1') ist allgemein nach dem Prinzip einer elektromagnetischen Rotationsmaschine aufgebaut, die mit einem Bewegungsgewinde-Paar gekoppelt ist. Wobei einer der Gewindepartner mit dem Rotor drehfest gekoppelt ist und der andere Partner linear geführt wird und somit eine translatorische Bewegung an den Stößel weiterleitet.

Besondere Vorteile der Antriebseinrichtung (1') sind beispielsweise:

### Kompaktheit:

Die teleskopierbare Anordnung der zueinander koaxial liegenden mechanischen und elektrischen Komponenten erlaubt eine Verschachtelung des Stößels (8) mit dessen Übersetzungsmechanik (Gewindepaar 6,7) sowie dessen Linearführung mit Verdrehsicherung (11) innerhalb der Antriebseinrichtung (1'), ohne dabei die Reduzierung der Leistung und der Kraft der elektromagnetischen Rotationsmaschine einbüßen zu müssen. Dies bewirkt somit ein sehr günstiges Verhältnis des Verfahrwegs (V_{W}) des Stößels (8) zur Gesamtlänge der Antriebseinrichtung (1').

### Niedrige Fertigungskosten:

Beispielsweise kann eine elektromagnetische Rotationsmaschine der Antriebseinrichtung (1') als ein BLDC-Motor mit PM-Erregung ausgeführt sein. Hierdurch wird eine hohe Leistungsdichte bei relativ einfacher Ansteuerung und somit preiswerter Steuer- und Leistungselektronik erreicht.

### Relativ hohe Stellkraft bei niedrigen Fertigungskosten:

Eine Außenläufer-Motoranordnung erlaubt eine größere Fläche für eine Interaktion zwischen Rotor (4) und Stator (5). Dies bewirkt ein hohes Drehmoment und führt bei einer gleichbleibenden Kraft am Stößel (8) zur größeren Steigung des Gewindepaares. Bei einer gleichen Verfahrzeit erlaubt die größere Gewindesteigung eine kleinere Drehzahl. Eine kleinere Drehzahl hat eine kleinere benötigte eingespeiste Energie zur Folge und erlaubt somit kleinere Ströme sowohl im Spitzenwert als auch im Mittelwert. Die Leistungselektronik kann somit günstiger ausgelegt werden.

Eine Außenläufer-Motoranordnung vereinfacht die Montage von Wicklungen (12), die z.B. als Aufsteckspulen auf dem Statorblechpaket (5) von außen angebracht werden können. Zudem benötigen die Magnete im Rotor (4) keine zusätzliche Sicherung gegen die Fliehkraft. Die Fertigungskosten werden dadurch erheblich reduziert.

Zudem liegt eine besondere Motortopologie in Form einer fractional slot concentrated windings (FSCW) vor, die ein unkonventionelles Verhältnis von Stator- und Läuferpolen aufweist und sich durch ein besonders hohes Drehmoment auszeichnet. Das führt bei einer gleichbleibenden Kraft am Stößel (8) zur größeren Steigung des Gewindepaares. Bei einer gleichen Verfahrzeit erlaubt die größere Gewindesteigung eine kleinere Drehzahl. Eine kleinere Drehzahl hat kleinere benötigte eingespeiste Energie zur Folge und erlaubt somit kleinere Ströme sowohl im Spitzenwert als auch im Mittelwert. Die Leistungselektronik kann somit günstiger ausgelegt werden.

Eine Außenläufer-Motoranordnung erlaubt eine formschlüssige Verbindung des Rotors (4) zu der Spindel (6) über einen dünnen Flansch(10) und lässt somit die axiale Gesamtlänge besser für den nützlichen Verfahrweg ausschöpfen.

Ein Außenläufer-Motoranordnung erlaubt eine gegenüber eines Innenläufers einfachere Unterbringung der Linearführung mitsamt einer Verdrehsicherung (11) innerhalb des Statorrohrs (2). Eine polygonale Ausnahme, die eine Art der Keilverbindung für die Verdrehsicherung (11) darstellt, kann z.B. durch ein Strangpressverfahren relativ günstig hergestellt werden.

Ein beispielsweise glatter Stößel (8) erlaubt eine gute Abdichtung der Antriebseinrichtung (1'), die für hohe Lebensdauer eine essentielle Bedeutung hat. Die in dem Statorrohr (5) bzw. der Statorhülse (5) integrierte Verdrehsicherung (11) reduziert die Beanspruchung der Abdichtung auf nur eine translatorische Komponente der Relativbewegung.

Der Querschnitt des Stößels (8) kann rund ausgebildet sein, wodurch eine optimale Abdichtung der Antriebseinrichtung (1') gegen äußere Einflüsse gewährleistet ist.

Die vorgeschlagene Linearführung mit Verdrehsicherung (11) und die Gewindepaarung (6, 7) können als Gleitkörper ausgeführt werden. Dies erlaubt eine kompaktere und beispielsweise gegenüber einer Kugelumlaufspindel eine preisgünstigere Bauweise. Eine schmiermittelfreie Anwendung ist beispielsweise durch den Einsatz von Hochleistungs-Kunstoffen z.B. "IGLIDUR" möglich, wodurch eine längere Lebensdauer bzw. eine Wartungsfreiheit gewährleistet wird.

Die erfindungsgemäße Antriebseinrichtung (1') sieht vor, die verschleißanfälligen Teile mit geringem Aufwand ersetzen zu können. Es kann ebenso das Übertragungsverhältnis an die Kundenanforderungen angepasst werden, indem u. a. durch eine kleinere Gewindesteigung ein selbsthemmendes Verhalten des Gewindepaars (6, 7) erreicht wird, ohne dabei die elektromagnetische Rotationsmaschine zu verändern.

Durch die, der Erfindung zugrundeliegende mechanische Kraftübertragungskette lässt sich eine sehr günstige Konstellation der Gewindepaarung (6, 7) umsetzen.

Es lässt sich eine Kombination einer kurzen Gewindemutter (7) mit einer langen Spindel (6) realisieren. Der Fertigungsaufwand für ein vergleichbares Innengewinde liegt deutlich höher als der für das Außengewinde.

Die erfindungsgemäße Antriebseinrichtung (1') kann beispielsweise als ein direkter Ersatz von pneumatischen Kurzhubzylindern fungieren und richtet sich somit an die, für die Pneumatikzylinder typischen Gebrauchseigenschaften wie:
- kompakte Abmessungen, (günstiges Verhältnis - Verfahrweg zu Gesamtlänge);
- hohe Dynamik;
- hohe Stellkraft;
- lange Lebensdauer;
- niedriger Anschaffungspreis.

Als Anwendungsgebiet für die Antriebseinrichtung (1') kommen diverse Fertigungslinien mit hohem Grad an Automatisierung in Frage, wie:
- Verpackungs- und Sortiermaschinen,
- Holzbearbeitung,
- Werkzeugmaschinen.

Zudem kann die erfindungsgemäße Antriebseinrichtung (1') für folgende Anwendungen genutzt werden:
- Automobiltechnik,
- Automatisierungsstraßen,
- Logistik etc.

Nachfolgend wird die Erfindung anhand von Figuren erläutert, wobei die Erfindung nicht hierauf beschränkt ist:
Es zeigen:
- Fig. 1:: schematisch eine Antriebseinrichtung (1') zur Erzeugung einer translatorischen Bewegung eines verfahrbaren Stößels (8) mittels einer elektromagnetischen Rotationsmaschine,
- Fig. 2:: schematisch eine Ausnehmung (14) innerhalb der Antriebseinrichtung (1') aus Fig. 1 und
- Fig. 3:: schematisch einen Ausschnitt aus einer Schnittdarstellung A-A der Antriebseinrichtung (1') aus Fig. 1 im Bereich der Gewindemutter (7).

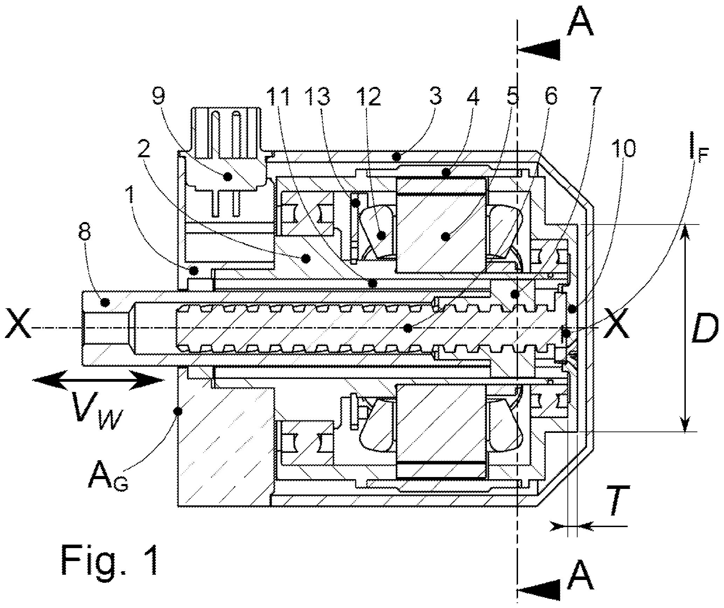

In Figur 1 ist schematisch eine Antriebseinrichtung (1') zur Erzeugung einer translatorischen Bewegung eines verfahrbaren Stößels (8) mittels einer elektromagnetischen Rotationsmaschine gezeigt.

Die Antriebseinrichtung (1') kann beispielsweise folgende Bestandteile umfassen: einen Gehäuseflansch (1) mit einem Statorrohr bzw. einer Statorhülse (2), eine Abdeckhaube (3), einen Rotor (4), einen Stator (5) bzw. ein Statorblechpaket (5), auf dem Wicklungen (12) angeordnet sind, die in Verbindung mit einem Sensorsystem (13) stehen, eine Gewindespindel (6) mit einer Gewindemutter (7) und einen Stößel (8), sowie einen Anschluss (9) für eine Steuer- und Leistungselektronik.

Zum Rotor (4) ist der Stator (5) koaxial angeordnet und umfasst zumindest ein darin koaxial integriertes Bewegungsgewinde-Paar (6, 7), umfassend eine drehfest mit dem Rotor (4) gekoppelte Gewindespindel (6) und eine, in der Statorhülse (2) verdrehsicher linear geführte Gewindemutter (7), die mit dem vorzugsweise rohrförmigen Stößel (8) starr gekoppelt ist, wobei der Rotor (4) um den Stator (5) beispielsweise außerhalb des Stators (5) drehbeweglich geführt wird und somit zum einen eine große, dem Stator (5) zugewandte Interaktionsfläche bietet und eine damit zusammenhängende große Antriebskraft erzeugbar ist.

Zum anderen wird durch diese Anordnung eine Ausnehmung (14) für die innere Übersetzungsmechanik (6, 7, 8) ermöglicht, wobei die Übertragung eines Drehmoments vom Rotor (4) zur Gewindespindel (6) mittels eines dünnwandigen Flansches (10) erfolgt, der nur eine minimale Einbaulänge in axialer Richtung in Anspruch nimmt.

Hierdurch wird der nutzbare Verfahrweg (Vw) der Gewindemutter (7) mit dem Stößel (8) maximiert, derart, dass sich dieser durch die zumindest gesamte Länge der Antriebseinrichtung (1') mit Ausnahme des Flansches (10) erstreckt, obgleich auch kürzere Ausführungen in Frage kommen können und diese für einen nutzbaren Verfahrweg des Stößels (8) vollständig ausschöpfbar sind.

Zudem ist eine Verdrehsicherung (11) der Gewindemutter (7) in der Führungsnut (2') des Statorrohrs (2) bzw. der Statorhülse (2) durch eine formschlüssige Zusammenfügung des Statorrohrs (2) mit der Gewindemutter (7) vorgesehen. Dadurch kann der Querschnitt des Stößels (8) rund ausgeführt werden, womit gewährleistet wird, dass eine optimale Abdichtung der Antriebseinrichtung (1') gegen äußere Einflüsse vorliegt.

In dieser Ausführungsform der Antriebseinrichtung (1') sind der Rotor und der Stator zu einer elektrischen Maschine derart zusammengefügt, dass diese als ein Außenläufer ausgebildet ist, wobei die Antriebseinrichtung (1') in einem der folgenden Motortypen angeordnet sein kann:
- Synchronmotoren einschließlich Transversalflussmotoren und Reluktanzmotoren und Schrittmotoren,
- Asynchronmotoren,
- elektronik-kommutierte Gleichstrommotoren oder
- bürstenkommutierte Gleichstrommotoren.

In dem Gehäuseflansch (1) ist ein elektrischer Anschluss (9) für ein Messsystem und/oder eine Energieversorgung und/oder Signalübertragung zur magnetischen und/oder optischen kontakt- oder berührungslosen Erfassung der Linearbewegung des Stößels (8) und/oder der Rotationsbewegung des Rotors (4).

Mit der erfindungsgemäßen Antriebseinrichtung (1') kann die Ansteuerung der elektromagnetischen Rotationsmaschine sensorlos erfolgen.

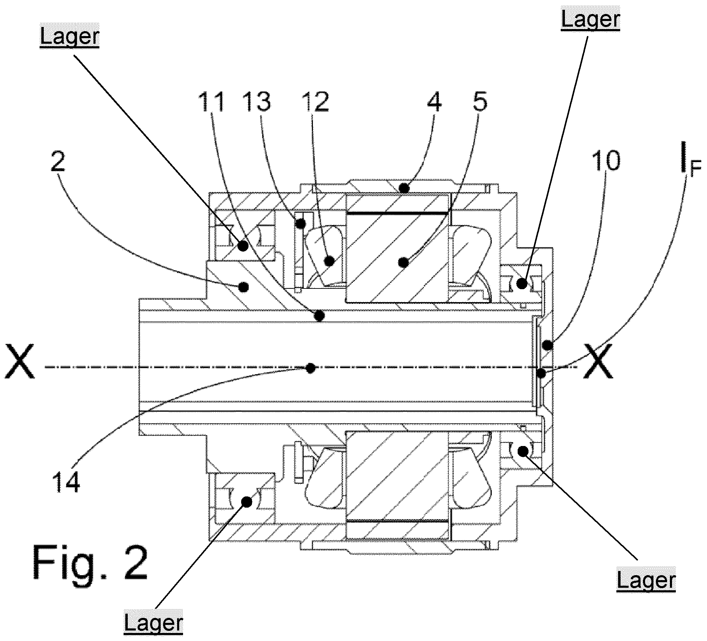

In Fig. 2 ist schematisch eine Ausnehmung (14) innerhalb der Antriebseinrichtung (1') aus Fig. 1 dargestellt.

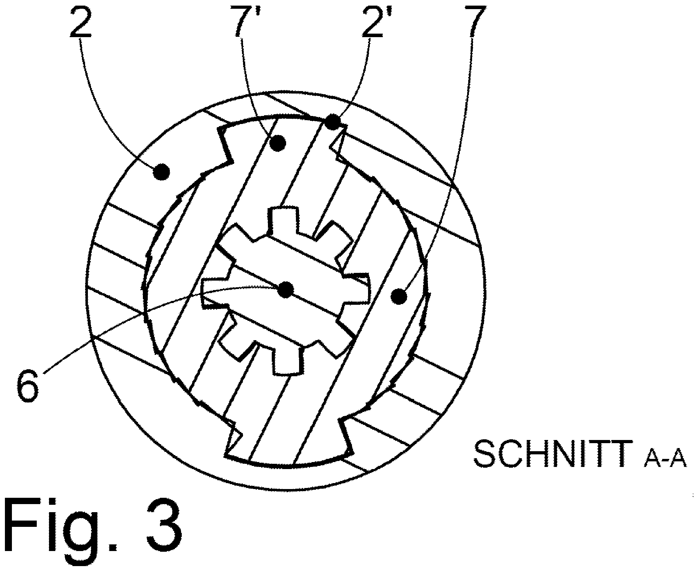

Aus Fig. 3 geht schematisch ein Ausschnitt aus einer Schnittdarstellung A-A der Antriebseinrichtung (1') aus Fig. 1 im Bereich der Gewindemutter (7) hervor. Erkennbar ist die Gewindespindel (6) mit der Gewindemutter (7) mit Führungsnasen (7'), die in Führungsnuten (2') des Statorrohrs (2) eingreifen.

### Legende:

- (1'): Antriebseinrichtung
- (1): Gehäuseflansch
- (2): Statorrohr, (2') Führungsnut des Statorrohrs (2)
- (3): Abdeckhaube
- (4): Rotor
- (5): Stator
- (6): Gewindespindel
- (7): Gewindemutter; (7') Führungsnase der Gewindemutter (7)
- (8): Stößel
- (9): Anschluss für Elektronik
- (10): Flansch
- (11): Verdrehsicherung
- (12): Wicklung
- (13): Sensorsystem
- (14): Ausnehmung
- (Vw): Verfahrweg
- (X): X-Achse
- I_{F}: Innenfläche des Flansche (10)
- (A_{G}): Außenfläche des Gehäuseflansches (1)

## Patentansprüche

1. Antriebseinrichtung (1') zur Erzeugung einer translatorischen Bewegung eines verfahrbaren Stößels (8) mittels einer elektromagnetischen Rotationsmaschine, **wobei** die elektromagnetische Rotationsmaschine als Außenläufer ausgebildet ist, umfassend zumindest:
- einen Rotor (4),
- einen zum Rotor (4) koaxial angeordneten Stator (5) mit zumindest einem darin koaxial integrierten Bewegungsgewinde-Paar, umfassend eine drehfest mit dem Rotor (4) gekoppelte Gewindespindel (6) und einer, in einer Statorhülse (2) verdrehsicher linear geführten Gewindemutter (7), die mit dem Stößel (8) starr gekoppelt ist, **wobei**
- der Rotor (4) um den Stator (5) drehbeweglich geführt wird **wobei**
- die Übertragung eines Drehmoments vom Rotor (4) zur Gewindespindel (6) mittels eines Flansches (10) erfolgt, der eine Wandstärke T < 0,1 D mit D = Durchmesser des Flansches (10) aufweist, **wobei**
- eine Verdrehsicherung (11) der Gewindemutter (7) in der Ausnehmung der Statorhülse (2) durch eine formschlüssige Zusammenfügung der beiden vorgesehen ist.

2. Antriebseinrichtung (1') nach Anspruch 1,
**dadurch gekennzeichnet,**
**dass** die Antriebseinrichtung (1')unter folgenden Motortypenausgewählt ist:
- Synchronmotoren einschließlich Transversalflussmotoren und Reluktanzmotoren und Schrittmotoren,
- Asynchronmotoren,
- elektronik-kommutierte Gleichstrommotoren oder
- bürstenkommutierte Gleichstrommotoren.

3. Antriebseinrichtung (1') nach Anspruch 1 oder 2,
**dadurch gekennzeichnet,**
**dass** in einem Gehäuseflansch (1) ein elektrischer Anschluss (9) für eine Energieversorgung und/oder Signalübertragung zur magnetischen und/oder optischen kontakt- oder berührungslosen Erfassung der Linearbewegung des Stößels (8) und/oder der Rotationsbewegung des Rotors (4) angeordnet ist.

4. Antriebseinrichtung (1') nach einem Anspruch 3,
**dadurch gekennzeichnet,**
**dass** ein Sensorsystem (13) zur Erfassung der Rotationsbewegung des Rotors (4) vorgesehen ist.

5. Antriebseinrichtung (1') nach einem der vorhergehenden Ansprüche,
**dadurch gekennzeichnet,**
**dass** die Ansteuerung der elektromagnetischen Rotationsmaschine der Antriebseinrichtung (1') sensorlos erfolgt.

## Claims

1. A drive device (1') for generating a translational movement of a movable tappet (8) by means of an electromagnetic rotating machine,
**wherein** the electromagnetic rotating machine is designed as an outer rotor, comprising at least:
- a rotor (4),
- a stator (5) arranged coaxially to the rotor (4), the stator having at least one movement-thread pair integrated coaxially therein, comprising a lead screw (6), which is coupled in a rotationally fixed manner to the rotor (4), and a threaded nut (7) guided linearly in a stator sleeve (2) by anti-twist locking, the threaded nut (7) being rigidly coupled to the tappet (8), **wherein**
- the rotor (4) is guided in a rotational movement around the stator (5), **wherein**
- the transfer of a torque from the rotor (4) to the lead screw (6) takes place by means of a flange (10) having a wall thickness T < 0.1 D, with D = diameter of flange (10), **wherein**
- an anti-twist lock (11) of the threaded nut (7) is provided in the recess of the stator sleeve (2) by a form-fitting interlocking of the two.

2. Drive device (1') according to Claim 1,
**characterized in that** drive device (1') is selected from the group of motor types consisting of:
- synchronous motors including transverse flux motors and reluctance motors and stepper motors,
- asynchronous motors,
- electronic-commutated DC motos, or
- brush-commutated DC motors.

3. Drive device (1') according to Claim 1 or 2,
**characterized in that** in a housing flange (1) is arranged an electrical connection (9) for a power supply and/or signal transmission for the magnetic and/or optical contact or contact-free detection of the linear movement of the tappet (8) and/or the rotational movement of the rotor (4).

4. Drive device (1') according to Claim 3,
**characterized in that** a sensor system (13) is provided for detecting the rotational movement of the rotor (4).

5. Drive device (1') according to any of the preceding Claims, **characterized in that** the electromagnetic rotating machine of the drive device (1') is actuated without a sensor.

## Revendications

1. Dispositif d'entraînement (1') pour la génération d'un mouvement en translation d'un poussoir (8) mobile au moyen d'une machine tournante électromagnétique, dans lequel la machine tournante électromagnétique est réalisée sous la forme d'un induit extérieur, comprenant au moins :
- un rotor (4),
- un stator (5) disposé de manière coaxiale par rapport au rotor (4) avec au moins une paire de filetages de mouvement intégrés de manière coaxiale dans celui-ci, comprenant un arbre fileté (6) accouplé de manière solidaire en rotation au rotor (4) et un écrou fileté (7) guidé linéairement avec blocage en rotation dans un manchon de stator (2), qui est accouplé rigidement au poussoir (8), dans lequel
- le rotor (4) est guidé de manière mobile en rotation autour du stator (5) dans lequel
- la transmission d'un couple du rotor (4) à l'arbre fileté (6) s'effectue au moyen d'une bride (10), qui présente une épaisseur de paroi T < 0,1 D avec D = diamètre de la bride (10), dans lequel
- un blocage en rotation (11) de l'écrou fileté (7) dans l'évidement du manchon de stator (2) est prévu par une réunion des deux par coopération de formes.

2. Dispositif d'entraînement (1') selon la revendication 1,
**caractérisé en ce**
**que** le dispositif d'entraînement (1') est sélectionné parmi les types de moteur suivants :
- moteurs synchrones y compris moteurs à flux transverse et moteurs à réluctance et moteurs pas à pas,
- moteurs asynchrones,
- moteurs à courant continu à commutation électronique ou
- moteurs à courant continu à commutation à balais.

3. Dispositif d'entraînement (1') selon la revendication 1 ou 2,
**caractérisé en ce**
**qu'**un raccord électrique (9) pour une alimentation en énergie et/ou transmission de signaux pour la détection magnétique et/ou optique sans contact ou toucher du mouvement linéaire du poussoir (8) et/ou du mouvement de rotation du rotor (4) est disposé dans une bride de boîtier (1).

4. Dispositif d'entraînement (1') selon la revendication 3,
**caractérisé en ce**
**qu'**un système de capteur (13) est prévu pour la détection du mouvement de rotation du rotor (4).

5. Dispositif d'entraînement (1') selon l'une quelconque des revendications précédentes,
**caractérisé en ce**
**que** la commande de la machine tournante électromagnétique du dispositif d'entraînement (1') s'effectue sans capteur.
